# EUROPEAN PATENT APPLICATION

(11) **EP 4 512 591 A1**
(43) Date of publication of application: **26.02.2025**
(21) Application number: 23791910.5
(22) Date of filing: 20.04.2023
(51) Int. Cl.: B29B 11/08, B29B 11/14, B29C 49/06, B65D 1/00

(54) **METHOD AND DEVICE FOR PRODUCING RESIN CONTAINER**

(30) Priority: 21.04.2022 JP 2022070147
(71) Applicant: Nissei ASB Machine Co., Ltd., Komoro-shi, Nagano 384-8585 (JP)
(72) Inventor: TAKAHASHI Junji, Komoro-Shi Nagano 384-8585 (JP)
(74) Representative: Mewburn Ellis LLP
(86) International application number: PCT/JP2023/015707
(87) International publication number: WO 2023/204262

(57) **Abstract**

A resin container production method includes: an injection-molding step of injection-molding a bottomed cylindrical resin preform; and a blow-molding step of blow-molding the preform while containing residual heat from injection-molding to produce a resin polygonal container having a plurality of corner portions in a circumferential direction. The thickness of a first part corresponding to a wall surface portion of the container is thicker than the thickness of a second part corresponding to the corner portion of the container in the circumferential direction of the preform, and an outer peripheral surface of the second part of the preform is located radially inward relative to an outer peripheral surface of the first part of the preform.

## Description

### Technical Field

The present invention relates to a method and an apparatus for producing a resin container.

### Background Art

Containers for storing cosmetics, lotions, and the like are required to have an aesthetic appearance in order to increase consumer purchasing power. For this type of thick-walled polygonal containers (e.g., rectangular containers) for storing cosmetics, glass bottles are preferred because they have a massive feeling and a luxurious feeling and can maintain their beautiful condition even after repeated use. However, glass bottles are heavy, breakable, and expensive to transport and produce. For this reason, the replacement of glass bottles with resin containers for storing cosmetics and the like is being considered.

Here, a hot parison type blow-molding method has been conventionally known as one method of producing a resin container. In the hot parison type blow-molding method, the residual heat in the preform from injection-molding is utilized to blow-mold a resin container. Therefore, compared to the cold parison method, this method has the advantage of being able to produce a wide variety of resin containers with excellent aesthetic appearance.

When a polygonal container is blow-molded, the stretch ratio of the preform varies depending on the part of the container. Specifically, the stretch ratio of the preform is greater at the corner portions of the container body portion than at the wall surface of the container body portion. Therefore, in the production of polygonal containers, differences in the stretch ratio of the preform can easily result in poor appearance, such as columns (thick, band-like portions extending in the axial direction) on the body portion wall, reduced formability at the corners and ridges of the container, and uneven thickness (uneven stretching) of the container. In a typical hot parison blow-molding cycle, the above-described poor appearance of the container can be mitigated to some extent by adjusting the temperature of the preform before blow-molding the container.

Furthermore, when blow-molding a polygonal container from resin, for example, Patent Literature 1 proposes that the inner shape of the preform be a shape that corresponds to the polygonal container, and that the thickness of the portion that corresponds to the wall surface of the container be thicker than the thickness of the portion that corresponds to the corner portions of the container.

### Citation List

### Patent Literature

Patent Literature 1: JP H6-71758 B

### Summary of Invention

### Technical Problem

Polygonal containers for storing cosmetics and the like have high requirements regarding the appearance of the container. For example, a flat shape without any unevenness is preferred for the body portion, and containers with columns on the body portion do not meet the specifications. On the other hand, the poor appearance of the body portion of the polygonal container has not yet been completely resolved, and further improvement is required.

Further, when the production cycle of containers is shortened, the main temperature adjustment step after injection-molding involves cooling the preform. Therefore, when attempting to produce polygonal containers in a short production cycle, it becomes difficult to adjust the temperature distribution of the preform so as to be suitable for producing polygonal containers, making the containers more susceptible to poor appearance.

Therefore, the present invention has been made in view of the above problems, and an object is to provide a production method capable of producing polygonal resin containers having an excellent aesthetic appearance in a short production cycle.

### Solution to Problem

A resin container production method according to one aspect of the present invention includes: an injection-molding step of injection-molding a bottomed cylindrical resin preform; and a blow-molding step of blow-molding the preform while containing residual heat from injection-molding to produce a resin polygonal container having a plurality of corner portions in a circumferential direction. The thickness of a first part corresponding to a wall surface portion of the container is thicker than the thickness of a second part corresponding to the corner portion of the container in the circumferential direction of the preform, and an outer peripheral surface of the second part of the preform is located radially inward relative to an outer peripheral surface of the first part of the preform.

### Advantageous Effects of Invention

According to one aspect of the present invention, a production method can be provided that can produce polygonal resin containers with excellent aesthetic appearance in a short production cycle.

### Brief Description of Drawings

Fig. 1 is a longitudinal cross-sectional view of a preform according to an embodiment of the present invention.
Fig. 2 is a transverse cross-sectional view of a body portion of the preform according to this embodiment.
Fig. 3 is an enlarged view of the preform of Fig. 2.
Fig. 4 is a diagram showing a schematic configuration of a blow-molding apparatus according to this embodiment.
Fig. 5 is a diagram showing a configuration example of an injection-molding unit.
Fig. 6 is a cross-sectional view taken along a line A-A of Fig. 5.
Fig. 7 is a diagram showing a configuration example of a temperature adjustment unit.
Fig. 8 is a diagram showing a configuration example of a blow-molding unit.
Fig. 9 is a flowchart showing steps of a method of producing a container.

### Description of Embodiments

Hereinafter, an embodiment of the present invention will be described with reference to the drawings.

In the embodiment, in order to make the description easier to understand, structures and elements other than the main parts of the present invention will be described in a simplified or omitted manner. Further, in the drawings, the same elements are given the same reference numerals. Furthermore, the shapes, dimensions, etc. of each element shown in the drawings are shown merely as schematics and do not represent the actual shapes, dimensions, etc.

### <Configuration Examples of Preform and Container>

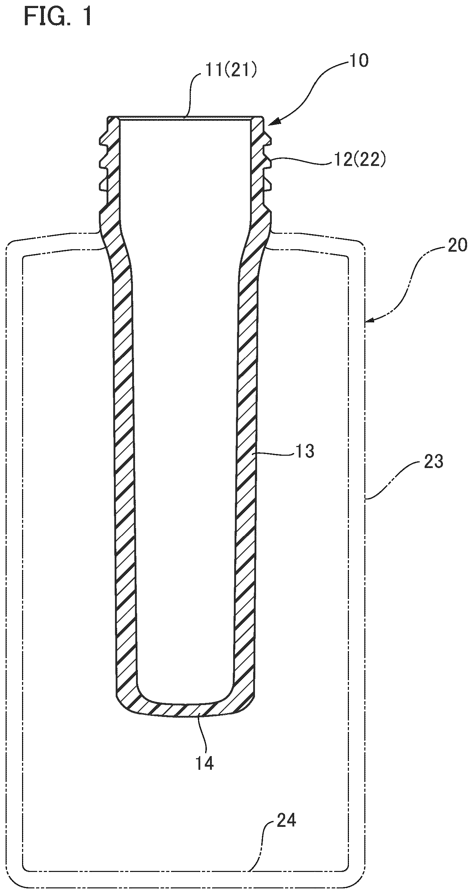

First, a configuration example of a preform 10 applied to the production of a resin container (hereinafter also simply referred to as a container) 20 of this embodiment will be described with reference to Figs. 1 to 3.

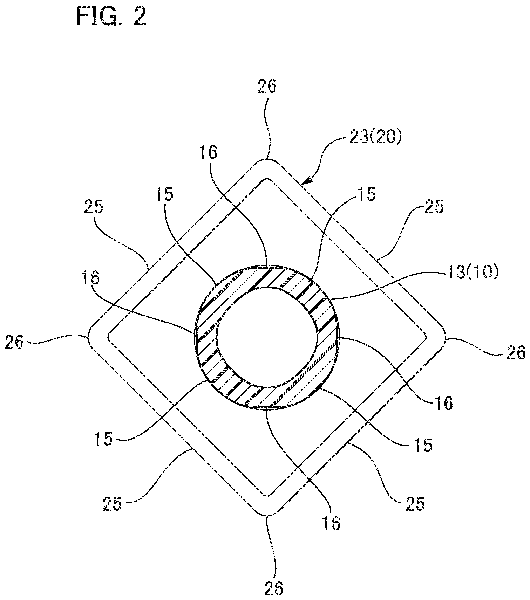

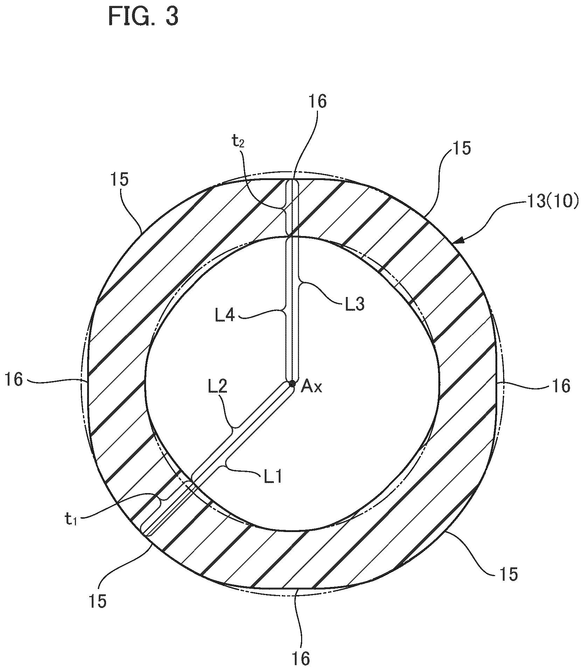

Fig. 1 is a longitudinal cross-sectional view of a preform 10 according to this embodiment, Fig. 2 is a transverse cross-sectional view of a body portion 13 of the preform 10 according to this embodiment, and Fig. 3 is an enlarged view of the preform of Fig. 2. Furthermore, in Figs. 1 and 2, the contour of the container 20 of this embodiment is shown by a two-dot chain line.

The container 20 is formed by blow-molding the preform 10. The container 20 of this embodiment is a polygonal container having a rectangular cross section as shown in Fig. 2, and contains, for example, lotion, milky lotion, etc. therein. The container 20 has a neck portion 22 having a mouth portion 21 at the upper end, a cylindrical body portion 23 continuing from the neck portion 22, and a bottom portion 24 continuing from the body portion 23.

As shown in Figs. 1 and 2, in the container 20, a wall surface portion (panel portion) 25 of the body portion 23 is uniformly thick in the axial direction (height direction) and circumferential direction, and has a flat shape with almost no unevenness. Further, as shown in Fig. 2, for example, corner portions 26 of the body portion 23 are thicker than the wall surface portion 25. Therefore, the contour of the inner peripheral side of the body portion 23 does not recess toward the outer peripheral side at the corner portions 26, and the adjacent wall surface portions 25 are connected to each other in a curved shape via the corner portions 26. Furthermore, the thickness of the bottom portion 24 of the container 20 is preferably greater than the thickness of the body portion 23.

Since the massive feeling and the luxurious feeling is emphasized by forming the container 20 in a shape having the above-described wall thickness distribution, it is possible to make the container 20 closer to the image of a cosmetic container that consumers have. That is, the aesthetic appearance of the container 20 can be improved, and the container 20 can be used as a cosmetic container or the like where appearance is important.

On the other hand, the overall shape of the preform 10 is a cylindrical shape with one end open and the other end closed as shown in Fig. 1. The preform 10 includes a cylindrical body portion 13, a bottom portion 14 closing the other end of the body portion 13, and a neck portion 12 formed on the opening side of one end of the body portion 13 and having a mouth portion 11.

As shown in Figs. 2 and 3, the thickness of the body portion 13 of the preform 10 varies circumferentially between a first part 15 corresponding to the wall surface portion 25 of the container 20 and a second part 16 corresponding to the corner portion 26 of the container 20. The first parts 15 and the second parts 16 are arranged alternately in the circumferential direction of the preform 10 at equal intervals, with four of each part being arranged. That is, the first parts 15 and the second parts 16 are formed at intervals of 90° in the circumferential direction, and the phases of the first parts 15 and the second parts 16 are shifted by 45° in the circumferential direction. Furthermore, the thickness of the first part 15 and the thickness of the second part 16 are both substantially constant and do not change in the axial direction (height direction), for example.

As shown in Fig. 3, the first part 15 of the body portion 13 has a radial length L1 from the axial center Ax of the preform 10 to the outer peripheral surface of the preform, and a radial length L2 from the axial center Ax to the inner peripheral surface of the preform. Therefore, the wall thickness t1 of the first part 15 of the preform 10 can be expressed as L1-L2.

On the other hand, in the second part 16 of the body portion 13, the radial length from the axial center Ax to the outer peripheral surface of the preform is L3 which is shorter than L1 of the first part (L1>L3). Further, the radial length from the axial center Ax to the inner peripheral surface of the preform in the second part 16 is L4, which is longer than L2 of the first part 15 (L4>L2). Therefore, the wall thickness t2 of the second part 16 of the preform 10 can be expressed as L3-L4.

As described above, the radial length L1 from the axial center Ax to the outer peripheral surface of the preform at the first part 15 and the radial length L3 from the axial center Ax to the outer peripheral surface of the preform at the second part 16 are different. Therefore, the outer peripheral surface of the body portion 13 of the preform 10 has a non-circular shape, and the outer peripheral surface of the second part 16 is located radially inward relative to the outer peripheral surface of the first part 15.

Similarly, a radial length L2 from the axial center Ax to the inner peripheral surface of the preform at the first part 15 and a radial length L4 from the axial center Ax to the inner peripheral surface of the preform at the second part 16 are different. Therefore, the inner peripheral surface of the body portion 13 of the preform 10 also has a non-circular shape, and the inner peripheral surface of the first part 15 is located radially inward relative to the inner peripheral surface of the second part 16.

Further, in the first part 15, the outer peripheral surface of the preform is located radially outward, and the inner peripheral surface of the preform is located radially inward, as compared with the second part 16. Therefore, the wall thickness t1 of the first part of the preform 10 is greater than the wall thickness t2 of the second part (t1>t2).

### <Description of Container Production Apparatus>

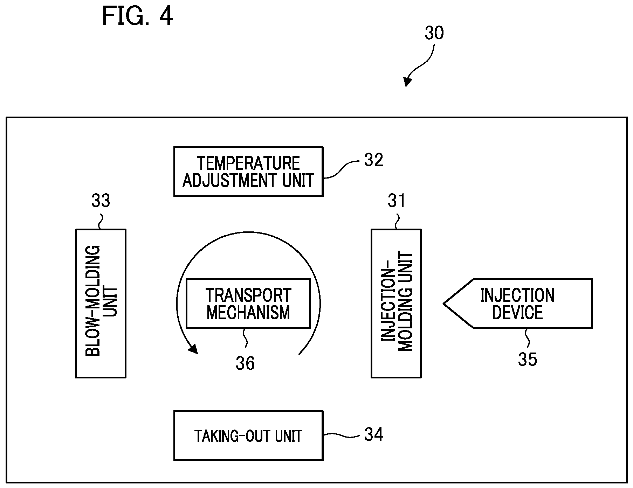

Fig. 4 is a diagram showing a schematic configuration of a blow-molding apparatus 30 of this embodiment. The blow-molding apparatus 30 is an example of a container production apparatus, and employs a hot parison method (also called a one-stage method) in which a container is blow-molded by utilizing the residual heat (internal heat) from injection-molding without cooling the preform 10 to room temperature.

The blow-molding apparatus 30 includes an injection-molding unit 31, a temperature adjustment unit 32, a blow-molding unit 33, a taking-out unit 34, and a transport mechanism 36. The injection-molding unit 31, the temperature adjustment unit 32, the blow-molding unit 33, and the removal unit 34 are arranged at positions rotated by a predetermined angle (for example, 90°) around the transport mechanism 36.

### (Transport Mechanism 36)

The transport mechanism 36 includes a transfer plate (not shown) that moves in a rotational direction about an axis perpendicular to the plane of Fig. 4. The transfer plate is composed of a single disk-shaped flat plate member or a plurality of roughly sector-shaped flat plate members divided for each forming station. On the transfer plate, one or more neck molds 36a (not shown in Fig. 4) for holding the neck portion 12 of the preform 10 (or the neck portion 22 of the container 20) are arranged at predetermined angles.

The transport mechanism 36 is equipped with a rotation mechanism (not shown), and by moving a transfer plate, transports the preform 10 (or container 20) whose neck portion 12 is held by the neck mold 36a, in that order, to the injection-molding unit 31, the temperature adjustment unit 32, the blow-molding unit 33, and the taking-out unit 34. Furthermore, the transport mechanism 36 further includes a lifting and lowering mechanism (vertical mold opening and closing mechanism) and a neck mold opening mechanism, and performs operations related to raising and lowering the transfer plate, as well as mold closing and mold opening (mold release) in the injection-molding unit 31, etc.

### (Injection-Molding Unit 31)

The injection-molding unit 31 produces the preform 10 shown in Figs. 1 to 3 by injection-molding. An injection device 35 that supplies the raw material (resin material) of the preform 10 is connected to the injection-molding unit 31.

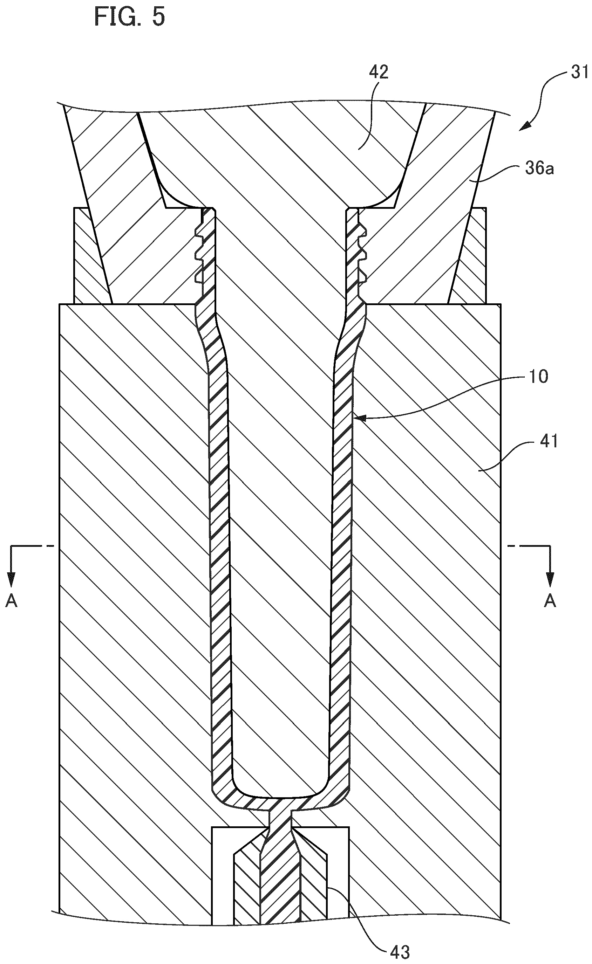

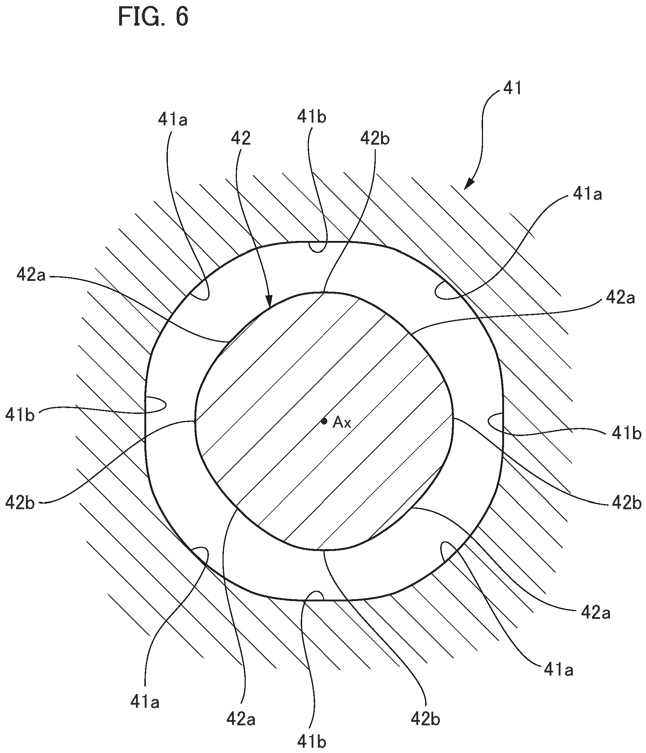

Fig. 5 is a diagram showing a configuration example of the injection-molding unit 31, and Fig. 6 is a cross-sectional view taken along a line A-A of Fig. 5. The injection-molding unit 31 includes an injection cavity mold 41 and an injection core mold 42. The injection cavity mold 41 is fixed to the machine base of the blow-molding apparatus 30. The injection core mold 42 is fixed to a core mold lifting and lowering mechanism (not shown).

The injection cavity mold 41 is a mold that defines the outer peripheral shape of the body portion 13 of the preform 10. A resin supply unit (hot runner) 43 for introducing a resin material from the injection device 35 is connected to the lower side of the injection cavity mold 41. On the other hand, the injection core mold 42 is a metal mold that defines the inner peripheral shape of the preform 10, and is inserted into the inner peripheral side of the injection cavity mold 41 from above.

As shown in Fig. 5, in the injection-molding unit 31, the injection cavity mold 41, the injection core mold 42, and the neck mold 36a of the transport mechanism 36 are closed to form a mold space for the preform 10. Then, a resin material is injected from the injection device 35 through the hot runner mold 43 from the bottom of the above-described mold space, whereby the preform 10 is produced in the injection-molding unit 31.

Fig. 6 shows a cross section (a cross section perpendicular to the axial direction) of the injection cavity mold 41 and the injection core mold 42 when the molds of injection-molding unit 31 are closed. In this embodiment, the inner peripheral surface of the injection cavity mold 41 is formed in a shape in which a second part region 41b is cut for four sides from the outside, and the second part region 41b is located radially inward in the injection cavity mold 41 than a first part region 41a. Further, in this embodiment, the outer peripheral surface of the injection core mold 42 is cut for four sides in first part regions 42a, and the first part region 42a of the injection core mold 42 is located radially inward relative to the second part region 42b. By combining the above-described injection cavity mold 41 and injection core mold 42, it is possible to injection-mold the preform 10 having the wall thickness distribution shown in Fig. 3.

Further, the raw material of the preform 10 is a thermoplastic synthetic resin, and can be appropriately selected depending on the specifications of the container 20. Specific types of materials include, for example, PET, PEN (polyethylene naphthalate), PCTA (polycyclohexane dimethylene terephthalate), Tritan (Tritan (registered trademark): a copolyester produced by Eastman Chemical Company), PP (polypropylene), PE (polyethylene), PC (polycarbonate), PES (polyethersulfone), PPSU (polyphenylsulfone), PS (polystyrene), COP/COC (cyclic olefin polymer), PMMA (polymethyl methacrylate: acrylic), and PLA (polylactic acid). Further, the resin material may contain additives such as colorants.

Furthermore, even when the molds of injection-molding unit 31 are opened, the neck mold 36a of the transport mechanism 36 is not opened and continues to hold and transport the preform. The number of preforms 10 that are molded simultaneously in the injection-molding unit 31 (that is, the number of containers 20 that can be molded simultaneously in the blow-molding apparatus 30) can be set appropriately.

### (Temperature Adjustment Unit 32)

The temperature adjustment unit 32 equalizes the temperature of the preform 10 transported from the injection-molding unit 31, removes temperature deviations, and adjusts the temperature distribution, thereby adjusting the temperature of the preform 10 to a temperature suitable for the final blow (for example, approximately 90°C to 105°C). Further, the temperature adjustment unit 32 also functions to cool the preform 10 which is in a high temperature state after injection-molding.

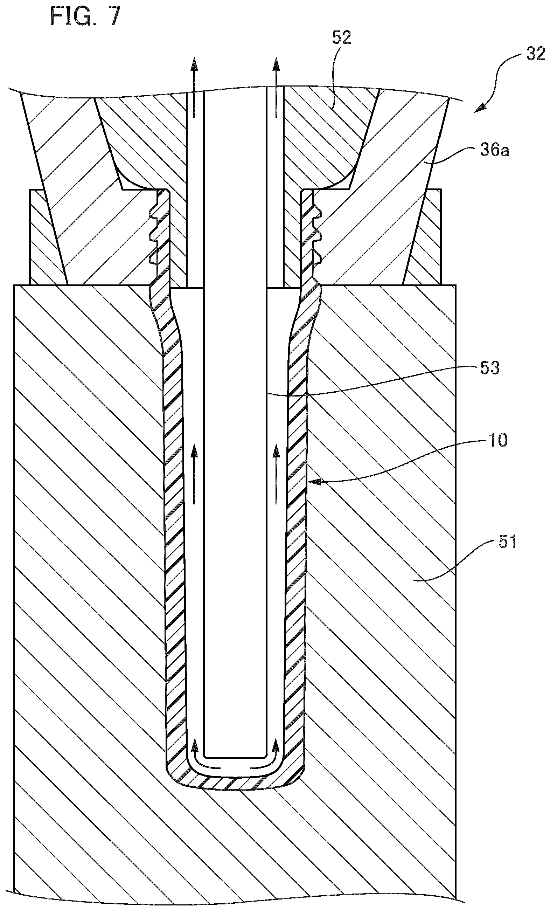

Fig. 7 is a diagram showing a configuration example of the temperature adjustment unit 32. For example, the temperature adjustment unit 32 is configured by combining a cavity mold 51 (temperature adjustment pot mold) capable of accommodating the preform 10, a cooling core 52 (air inlet/outlet core), and a cylindrical cooling rod 53 (air inlet/outlet rod).

The cooling core 52 is a cylindrical metal mold that is inserted into the inside of the neck mold 36a, and the cooling rod 53 is concentrically arranged inside the cooling core 52 with an annular gap therebetween. When inserted into the neck mold 36a, the cooling core 52 comes into close contact with the inner periphery or upper end surface of the neck portion 12 of the preform 10, maintaining airtightness with the preform 10. Further, the inside of the cooling rod 53 and the gap between the cooling rod 53 and the cooling core 52 respectively constitute a supply path and an exhaust path for compressed air. Fig. 7 shows an example in which the inside of the cooling rod 53 is connected to a compressed air supply path and the gap between the cooling rod 53 and the cooling core 52 is connected to a compressed air exhaust path, but the compressed air supply path and exhaust path may be in the reversed relationship. As described above, the temperature adjustment unit 32 can cool the preform 10 by blowing compressed air into the preform 10, through cooling by the compressed air and heat exchange through contact with the cavity mold.

Furthermore, when compressed air is introduced into the preform 10 in the temperature adjustment unit 32, the preform 10 may be preliminary blown in the temperature adjustment unit 32 prior to blow-molding, to mold an intermediate molded body (not shown) having a larger diameter body portion than the preform 10. Further, when preliminary blowing is performed in the temperature adjustment unit 32, the cavity mold 51 of the temperature adjustment unit 32 is composed of a pair of split molds separated along the axial direction.

### (Blow-Molding Unit 33)

The blow-molding unit 33 performs biaxial stretch blow-molding on the preform 10 whose temperature has been adjusted in the temperature adjustment unit 32, to produce the container 20.

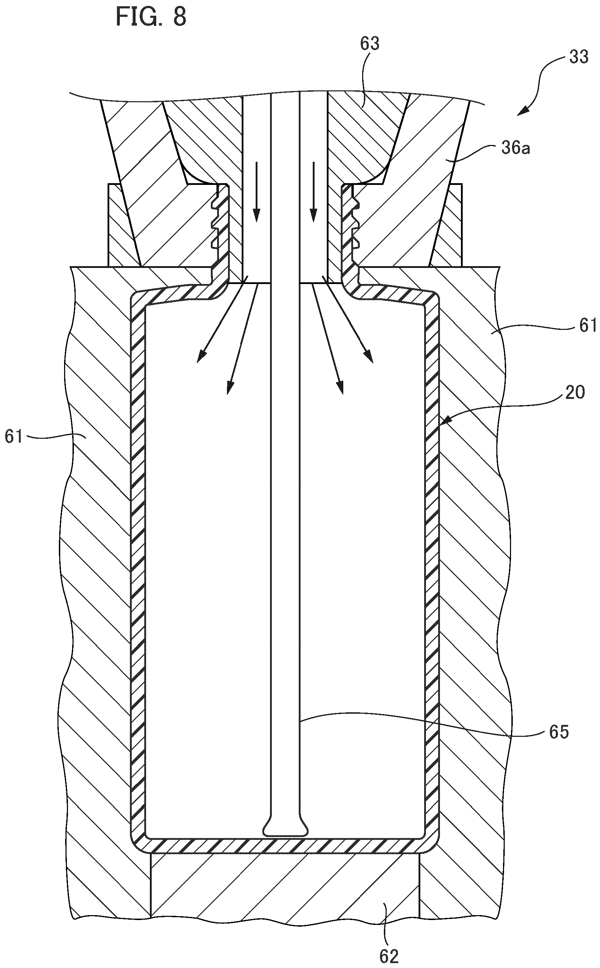

Fig. 8 is a diagram showing a configuration example of the blow-molding unit 33. The blow-molding unit 33 includes a blow cavity mold 61 which is a pair of split molds corresponding to the shape of the container 20, a bottom mold 62, a fitting core (blow core, cylindrical air inlet/outlet member) 63, and a stretching rod 65.

The stretching rod 65 is concentrically arranged inside the fitting core 63 so as to be movable axially back and forth. Further, the fitting core 63 is a cylindrical mold that is inserted inside the neck mold 36a, and when inserted into the neck mold 36a, it comes into close contact with the inner circumference or upper end surface of the neck portion 12 of the preform 10, maintaining airtightness with the preform 10 during blow-molding. Further, the gap between the inside of the fitting core 63 and the stretching rod 65 constitutes a supply path and an exhaust path for compressed air (blow air). The blow-molding unit 33 performs blow-molding by blowing compressed air into the preform 10 while stretching the preform 10. Accordingly, the preform 10 can be shaped to the shape of the blow cavity mold 61 to produce the container 20.

### (Taking-out Unit 34)

The taking-out unit 34 is configured to release the neck portion 22 of the container 20 produced in the blow-molding unit 33 from the neck mold 36a and taking-out the container 20 to the outside of the blow-molding apparatus 30.

### <Description of Container Production Method>

Next, a method of producing a container using the blow-molding apparatus 30 of this embodiment will be described.

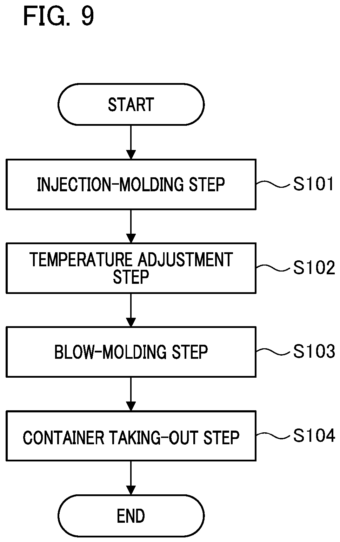

Fig. 9 is a flowchart showing steps of a method of producing the container 20.

### (Step S101: Injection-Molding Step)

First, in the injection-molding unit 31, a resin is injected from the injection device 35 into a preform-shaped mold space formed by the injection cavity mold 41, the injection core mold 42, and the neck mold 36a of the transport mechanism 36, to produce the preform 10. Then, after the injection (filling and pressure holding) of the resin material is completed, or after a minimum cooling time has elapsed after the completion of the injection, the injection-mold of the injection-molding unit 31 is opened.

Although not particularly limited, from the viewpoint of producing a container with a high-speed molding cycle, in step S101, it is preferable to open the mold after completion of the injection of the resin material (filling and pressure holding) without allowing time for the preform 10 to cool in the injection-mold.

On the other hand, when minimal cooling of the preform 10 is performed within the injection-mold, it is preferable that the time it takes to cool the resin material (cooling time) after the injection of the resin material is completed in the injection-molding unit 31 is half or less of the time it takes to inject the resin material (injection time). Further, the cooling time can be shorter than the time for injecting the resin material depending on the weight of the resin material. For example, the cooling time is more preferably 2/5 or less of the injection time of the resin material, further preferably 1/4 or less, and particularly preferably 1/5 or less. Additionally, the cooling time may be set to 0. Furthermore, the cooling time and the injection time are parameters that an operator can arbitrarily set for the blow-molding apparatus 30 as part of the molding conditions for the preform.

Further, in the body portion 13 of the preform 10 of this embodiment, the first part 15 corresponding to the wall surface portion 25 of the container 20 has a thick thickness t1, and the second part 16 corresponding to the corner portion 26 of the container 20 has a thin thickness t2. Since the residual heat of the preform 10 increases in proportion to the thickness, the residual heat of the first part 15 is relatively high and the residual heat of the second part 16 is relatively low in the circumferential direction of the body portion 13 of the preform 10.

When the injection-molding of the preform 10 is completed, the molds of injection-molding unit 31 are opened and the preform 10 is released from the injection cavity mold 41 and the injection core mold 42. Next, the transfer plate of the transport mechanism 36 moves so as to rotate by a predetermined angle, and the preform 10 held by the neck mold 36a is transported to the temperature adjustment unit 32 while still containing the residual heat from injection-molding.

### (Step S102: Temperature Adjustment Step)

Next, in the temperature adjustment unit 32, temperature adjustment is performed to bring the temperature of the preform 10 close to a temperature suitable for the final blow.

In the temperature adjustment step, the transfer plate is lowered so that the preform 10 held in the neck mold 36a is accommodated in the cavity mold 51, and the cooling core 52 abuts against the neck portion 12 of the preform 10, and the cooling rod 53 (air inlet/outlet rod) is inserted into the preform 10. Thereafter, compressed air is blown into the preform 10 from the cooling core 52 and/or the cooling rod 53 in contact with the neck portion 12 of the preform 10 (by blowing compressed air through the preform 10) to adjust the temperature. Accordingly, the temperature of the preform 10 is adjusted so as not to become lower than a temperature suitable for blow-molding, and furthermore, temperature deviations that occur from injection-molding are also reduced.

Before (or after) cooling (cooling blowing) the preform with compressed air in the temperature adjustment unit 32, preliminary blowing the preform 10 in the temperature adjustment unit 32 may be performed to mold an intermediate molded body (not shown) having a larger diameter body portion than the preform 10.

After the temperature adjustment step, the transfer plate of the transport mechanism 36 moves so as to rotate by a predetermined angle, and the preform 10 after temperature adjustment held by the neck mold 36a is transported to the blow-molding unit 33.

### (Step S103: Blow-Molding Step)

Next, in the blow-molding unit 33, the container 20 is blow-molded.

First, the blow cavity mold 61 is closed to accommodate the preform 10 in the mold space, and the fitting core 63 is lowered so that the fitting core 63 comes into contact with the neck portion 12 of the preform 10. Then, the stretching rod 65 (vertical axis stretching member) is lowered to press the bottom portion 14 of the preform 10 from the inside, and the preform 10 is stretched in the horizontal axis by supplying blow air from the fitting core 63 while performing vertical axis stretching as necessary.

When the preform 10 expands due to the introduction of blow air, the first part 15 of the body portion 13 of the preform 10 is pressed against the wall surface portion of the blow cavity mold 61, and the second part 16 enters the corner portion of the blow cavity mold 61. Accordingly, the preform 10 is shaped to expand so as to fit closely into the mold space of the blow cavity mold 61, and is blow-molded into the container 20. Furthermore, the bottom mold 62 waits in a lower position where it does not come into contact with the bottom portion 14 of the preform 10 before the blow cavity mold 61 is closed, and is controlled so as to quickly rise to the molding position before or after the mold is closed.

In the hot parison type blow-molding, the greater the amount of internal heat held by the preform 10, the more easily the preform 10 deforms. As described above, since the first part 15 of the preform 10 is thicker and has a higher residual heat than the second part 16, the first part 15 deforms before the second part 16 during blow-molding.

During blow-molding, the first part 15 of the preform 10 is stretched in the transverse direction and contacts the blow-mold before the second part 16. After the first part 15 of the preform 10 contacts the blow-mold, it continues to be stretched until the second part 16 contacts the corner portion of the blow-mold. Accordingly, the thickness of the wall surface portion 25 of the container 20 becomes more uniform, and the material of the container 20 moves from the center of the wall surface portion 25 toward the corner portions 26.

Further, as described above, the second part 16 of the preform 10 has a lower residual heat than the first part 15 and is therefore less likely to deform, so that the second part 16 is stretched later than the first part 15. Furthermore, since the outer peripheral surface of the second part 16 is located radially inward from the outer peripheral surface of the first part 15, the distance from the outer peripheral surface of the second part 16 to the corner portion of the blow-mold is greater than when the outer peripheral shape of the body portion of the preform 10 is circular. Therefore, the time it takes for the second part 16 of the preform 10 to come into contact with the corner portion of the blow-mold is sufficiently longer than the time it takes for the first part 15 to come into contact with the wall surface portion of the blow-mold. Therefore, the wall surface portion 25 of the container 20 is sufficiently stretched during blow-molding.

Further, although the wall thickness t2 of the second part 16 before blow-molding is thinner than the wall thickness t1 of the first part 15, the wall surface portion of the container 20 moves toward the corner portion 26 during blow-molding. Therefore, when the second part 16 comes into contact with the corner portion of the blow-mold, the wall thickness of the corner portion of the container 20 becomes large, and the residual heat becomes high. Accordingly, it is easier to create sharp edges and ridges at the corner portions 26 of the container 20.

### (Step S104: Container Taking-out Step)

When the blow-molding is completed, the blow cavity mold 61 is opened. Accordingly, the container 20 is movable from the blow-molding unit 33.

Next, the transfer plate of the transport mechanism 36 moves by a predetermined angle, and the container 20 is transported to the taking-out unit 34. At the taking-out unit 34, the neck portion 22 of the container 20 is released from the neck mold 36a and the container 20 is removed to the outside of the blow-molding apparatus 30.

This completes one cycle of the container production method. Thereafter, the transfer plate of the transport mechanism 36 is moved by a predetermined angle, and the above steps S101 to S104 are repeated. Furthermore, when the blow-molding apparatus 30 is in operation, the production of four sets of containers is carried out in parallel, with a time difference between each step.

Further, due to the structure of the blow-molding apparatus 30, the injection-molding step, the temperature adjustment step, the blow-molding step, and the container taking-out step each take the same amount of time. Similarly, the transport time between each step is the same.

The effects of this embodiment will be described below.

The preform 10 used in producing the container 20 of this embodiment has a circumferential thickness t1 of the first part 15 corresponding to the wall surface portion 25 of the container 20 that is thicker than a thickness t2 of the second part 16 corresponding to the corner portion 26 of the container 20. Further, the outer peripheral surface of the second part 16 of the preform 10 is located radially inward relative to the outer peripheral surface of the first part 15 of the preform 10.

In this embodiment, by making the thickness of the first part 15 thicker than that of the second part 16, the first part 15 has a higher residual heat, and the first part 15 deforms before the second part 16 during blow-molding. Further, since the outer peripheral surface of the second part 16 is located radially inward relative to the outer peripheral surface of the first part 15, the time it takes for the second part 16 to come into contact with the corner portion of the blow-mold is sufficiently longer than the time it takes for the first part 15 to come into contact with the wall surface portion of the blow-mold. Accordingly, since the first part 15 is sufficiently stretched during blow-molding, the generation of columns in the wall surface portion 25 of the container 20 and uneven thickness in the wall surface portion 25 are suppressed.

Further, in this embodiment, as the first part 15 is stretched in the transverse direction, when the second part 16 comes into contact with the blow-mold, the corner portions of the container 20 become thicker and have a higher residual heat. Therefore, it becomes easy to give the corner portions 26 of the container 20 clear edges and ridges, and the processing precision and appearance of the polygonal container can be further improved.

Further, in this embodiment, the deformation of the first part 15 and the second part 16 during blow-molding is adjusted by the wall thickness distribution and the shape of the outer peripheral surface of the preform 10. Therefore, even when it is difficult to adequately control the temperature of the preform after injection-molding, such as when the cooling time of the preform 10 in the injection-molding mold is shortened to produce the container in a high-speed production cycle, it becomes easier to obtain the container 20 with an excellent aesthetic appearance.

Further, in this embodiment, the inner peripheral surface of the first part 15 of the preform 10 is located radially inward relative to the inner peripheral surface of the second part 16 of the preform 10. Accordingly, since the thickness of the first part 15 can be made thicker than that of the second part 16 to increase the residual heat by the first part 15, the first part 15 can be made more easily deformed than the second part 16 during blow-molding.

The present invention is not limited to the above-described embodiment, and various improvements and design changes may be made without departing from the spirit of the present invention.

For example, the container produced by the production method of the present invention is not limited to a rectangular container having a square cross section as in the above embodiment. For example, the production method of the present invention may be applied to produce containers having a triangular, pentagonal or higher polygonal cross section, or an elliptical cross section. Further, the production method of the present invention may be applied to produce a flat container having a cross section with different minor and major axis dimensions.

In addition, the embodiment disclosed herein should be considered in all respects as illustrative and not restrictive. The scope of the present invention is defined by the claims, rather than the above description, and is intended to include all modifications within the meaning and scope of the claims.

### Reference Signs List

- 10: Preform
- 13: Body portion
- 15: First part
- 16: Second part
- 20: Container
- 23: Body portion
- 25: Wall surface portion
- 26: Corner portion
- 30: Blow-molding apparatus
- 31: Injection-molding unit
- 32: Temperature adjustment unit
- 33: Blow-molding unit
- 41: Injection cavity mold
- 42: Injection core mold

## Claims

1. A resin container production method comprising:
an injection-molding step of injection-molding a bottomed cylindrical resin preform; and
a blow-molding step of blow-molding the preform while containing residual heat from injection-molding to produce a resin polygonal container having a plurality of corner portions in a circumferential direction, wherein
the thickness of a first part corresponding to a wall surface portion of the container is thicker than the thickness of a second part corresponding to the corner portion of the container in the circumferential direction of the preform, and
an outer peripheral surface of the second part of the preform is located radially inward relative to an outer peripheral surface of the first part of the preform.

2. The resin container production method according to claim 1, wherein
an inner peripheral surface of the first part of the preform is located radially inward relative to an inner peripheral surface of the second part of the preform.

3. The resin container production method according to claim 1, further comprising
a temperature adjustment step of adjusting the temperature of the preform produced by the injection-molding step before the blow-molding step.

4. A resin container production apparatus comprising:
an injection-molding unit which injection-molds a bottomed cylindrical resin preform; and
a blow-molding unit which blow-molds the preform while containing residual heat from injection-molding to produce a resin polygonal container having a plurality of corner portions in a circumferential direction, wherein
the injection-molding unit injection-molds the preform having a shape in which the thickness of a first part corresponding to a wall surface portion of the container is thicker than the thickness of a second part corresponding to the corner portion of the container in the circumferential direction of the preform and an outer peripheral surface of the second part of the preform is located radially inward relative to an outer peripheral surface of the first part.
